Europäisches Patentamt

European Patent Office

Office européen des brevets

(11) Veröffentlichungsnummer: **0 164 559**
**A1**

(12) # EUROPÄISCHE PATENTANMELDUNG

(21) Anmeldenummer: 85105457.7

(22) Anmeldetag: 04.05.85

(51) Int. Cl.⁴: **G 01 F 23/22**

(30) Priorität: **12.06.84 DE 3421803**

(43) Veröffentlichungstag der Anmeldung:
**18.12.85 Patentblatt 85/51**

(84) Benannte Vertragsstaaten:
. **FR GB NL**

(71) Anmelder: **MESSER GRIESHEIM GMBH**
**Hanauer Landstrasse 330**
**D-6000 Frankfurt/Main 1(DE)**

(72) Erfinder: **Hettinger, Wolfgang**
**Am Frohnweiher 14**
**D-5000 Köln 71(DE)**

(54) **Vorrichtung zur Ermittlung des Füllstandes in Kryobehältern.**

(57) Die Füllstandserfassung von kryogenen Flüssigkeiten mittels stromdurchflossener Meßfühler wird ungenau, wenn die Temperatur der Flüssigkeit schwankt, z. B. infolge von Druckänderungen, da das Signal des Meßfühlers mit einer konstanten, im Meßgerät einstellbaren Referenzspannung verglichen wird.

Um eine von Temperaturschwankungen unbeeinflußte Füllstandserfassung zu ermöglichen, wird die Referenzspannung durch einen Referenzfühler (2, 9) geliefert, der an einer möglichst tiefen Stelle im Kryobehälter (7) angeordnet ist, so daß er immer von Flüssigkeit (10) umgeben ist. Der Referenzfühler ist dann den gleichen Temperaturänderungen ausgesetzt wie die Meßfühler (1, 8). Der Temperatureinfluß wird dadurch ausgeglichen.

FIG. 2

EP 0 164 559 A1

– 1 –

MESSER GRIESHEIM GMBH                    MG 1462

Kennwort: Füllstandserfassung          EM 1141

Erfinder: W. Hettinger                   Ordner: E

## Vorrichtung zur Ermittlung des Füllstandes in Kryobehältern

Die Erfindung betrifft eine Vorrichtung zur Ermittlung des Füllstandes in Kryobehältern, nach dem Oberbegriff des Patentanspruches.

Die Ermittlung des Füllstandes in Kryobehältern geschieht üblicherweise mit stromdurchflossenen Fühlern, z. B. Kohlewiderständen, die im Innern des Kryobehälters angeordnet sind. Sobald der Fühler in die Flüssigkeit eintaucht, wird eine größere Wärmemenge vom Fühler abgeführt, als es der Fall ist, solange sich der Fühler im Gasraum des Kryobehälters befindet. Infolgedessen ändert sich die Temperatur des Fühlers und damit sein Meßsignal. Das Meßsignal wird als Spannungsänderung verstärkt und zur Anzeige gebracht. Es kann auch für eine weitere elektronische Verarbeitung verwendet werden. Zum Vergleich dient eine im Meßgerät ein-

...

stellbare Referenzspannung.

Diese Art der Füllstandserfassung genügt allen Anforderungen, solange im Kryobehälter ein konstanter Druck herrscht. Diese Druckkonstanz ist aber bei einer Reihe von Anwendungsfällen nicht gegeben, insbesondere wenn mit Phasentrennern gearbeitet wird, in welchen die flüssige Phase von der gasförmigen Phase getrennt wird. Zur Regelung der Anlage ist eine genaue Erfassung des Füllstandes im Phasentrenner erforderlich. Wegen der Druckschwankungen ergeben sich jedoch schwankende Siedetemperaturen der Flüssigkeit und damit schwankende Temperaturen des Fühlers. Das resultierende Meßsignal ist jedoch abhängig von der Temperatur und dementsprechend ungenau, eine genaue Regelung wird unmöglich.

Der Erfindung liegt daher die Aufgabe zugrunde, eine Vorrichtung zur Ermittlung des Füllstandes in Kryobehältern zu schaffen, die unabhängig von Temperaturschwankungen der Flüssigkeit ist.

Ausgehend von dem im Oberbegriff des Anspruches berücksichtigten Stand der Technik ist diese Aufgabe erfindungsgemäß gelöst mit den im kennzeichnenden Teil des Anspruches angegebenen Merkmalen.

Durch die erfindungsgemäße Maßnahme, einen Referenzfühler zur Erzeugung der Referenzspannung in der Flüssigkeit anzuordnen, wird zwar auch die Referenzspannung temperaturabhängig, das resultierende Meßsignal von Meßfühler und Referenzfühler aber unabhängig von der in der Flüssigkeit herrschenden Temperatur. Voraussetzung ist lediglich, daß die Fühler gleiche elektrische Eigenschaften haben und ihre Signale auf gleiche Art weitergeleitet werden.

Zwei Ausführungsbeispiele der Erfindung sollen anhand der bei-

...

gefügten Zeichnungen erläutert werden.

Es zeigen:

Fig. 1  das Grundprinzip der erfindungsgemäßen Vorrichtung mit nur einem Meßfühler anhand eines
Schaltschemas;

Fig. 2  einen Kryobehälter mit mehreren Meßfühlern;

Fig. 3  ein Schaltschema für die Vorrichtung von Fig. 2.

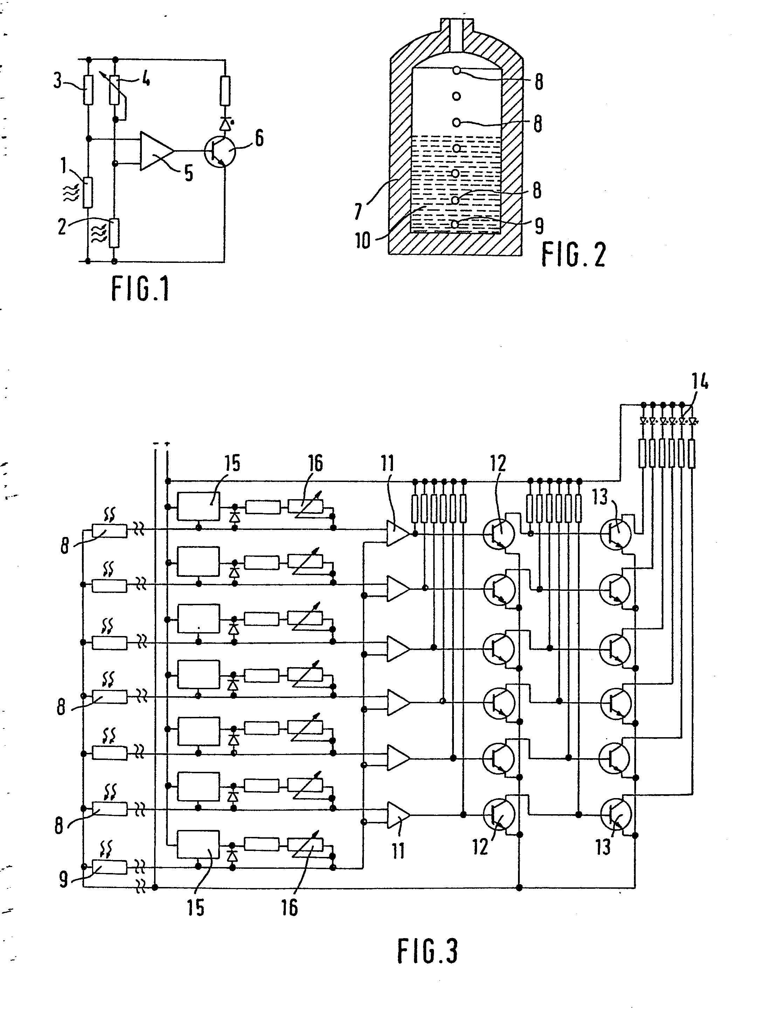

Das in Fig. 1 dargestellte Schaltschema zeigt die erfindungsgemäße Vorrichtung in ihrer einfachsten Form bestehend
aus einem Meßfühler 1 und einem Referenzfühler 2. Beide
Fühler sind Teil einer Brückenschaltung mit dem Vorwiderstand
3 und dem Abgleichwiderstand 4. Der Referenzfühler 2 ist
erfindungsgemäß an einer so tiefen Stelle im Kryobehälter
angeordnet, daß er immer von der Flüssigkeit umspült ist.
Er nimmt daher auch immer die jeweilige Temperatur der Flüssigkeit an.

Die Signale des Meßfühlers 1 und des Referenzfühlers 2
werden im Komparator 5 verglichen, im Verstärker 6 verstärkt
und zur Anzeige gebracht.

Während es die Vorrichtung gemäß Fig. 1 lediglich gestattet,
einen einzigen Füllstand im Kryobehälter zu ermitteln, können
mit der in Fig 2 dargestellten Vorrichtung beliebige Füllstände festgestellt werden. Hierzu sind im Kryobehälter 7
mehrere Meßfühler 8 übereinander angeordnet. Der Referenzfühler 9 befindet sich erfindungsgemäß widerum an der
tiefsten Stelle des Kryobehälters 7, so daß er immer von
Flüssigkeit 10 umgeben ist. Je nach dem wie hoch die Flüssigkeit 10 im Kryobehälter 7 steht, wird eine mehr oder weniger

...

große Anzahl von Meßfühlern 8 von der Flüssigkeit 10 umspült. Das Signal eines jeden Meßfühlers 8 wird mit dem des Referenzfühlers 9 verglichen, verstärkt und zur Anzeige gebracht, z. B. mittels Leuchtdioden.

Fig. 3 zeigt ein Schaltschema für die Vorrichtung nach Fig. 2. Die integrierte Schaltung 15 erzeugt in Verbindung mit den Potentiometern 16 einen Konstantstrom durch die Meßfühler 8 und den identisch ausgebildeten Referenzfühler 9, der das jeweilige Meßsignal erzeugt, das auf identische Weise weitergeleitet, in den Komparatoren 11 verglichen, in den Verstärkern 12 und 13 verstärkt und durch die Leuchtdioden 14 angezeigt wird. Dieses Ausgangssignal kann elektronisch weiterverwendet werden, z. B. für eine oder mehrere Füllstandsregelungen.

Ba/Ha

-1-

Anspruch

1. Vorrichtung zur Ermittlung des Füllstandes in Kryobehältern (7) mit mindestens einem im Kryobehälter befindlichen stromdurchflossenen Meßfühler (1, 8), dessen Signal mit einer im Meßgerät einstellbaren Referenzspannung vergleichbar ist,
gekennzeichnet
durch einen Referenzfühler (2, 9) zur Erzeugung der Referenzspannung, der an einer immer mit Flüssigkeit gefüllten tiefen Stelle des Kryobehälters angeordnet ist.

Ba/Ha

EM 1462

0164559

1 / 1

FIG.1

FIG.2

FIG.3

0164559

**EUROPÄISCHER RECHERCHENBERICHT**

Nummer der Anmeldung

| EINSCHLÄGIGE DOKUMENTE | EP 85105457.7 |
|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE - A - 1 473 132 (MOREAU) <br> * Seite 1, Zeile 1 - Seite 5, 1. Absatz; Seite 6, 3. Absatz - Seite 7, 1. Absatz; Fig. 1 * <br> -- | 1 | G 01 F 23/22 |
| A | DE - A1 - 3 115 776 (LICENTIA) <br> * Fig. 1-4 * <br> -- | 1 | |
| A | DE - A1 - 3 134 912 (MESSMER) <br> * Seite 5, 4. Absatz; Fig. 1 * <br> -- | 1 | |
| A | FR - A - 1 500 358 (COMPAGNIE GENERALE) <br> * Seite 1, Spalte 2, Zeilen 7-33; Fig. 2 * <br> ---- | 1 | |

| | | | RECHERCHIERTE SACHGEBIETE (Int. Cl.4) |
|---|---|---|---|
| | | | G 01 F 23/00 |

Der vorliegende Recherchenbericht wurde für alle Patentansprüche erstellt.

| Recherchenort | Abschlußdatum der Recherche | Prüfer |
|---|---|---|
| WIEN | 23-07-1985 | GRONAU |